# EUROPEAN PATENT APPLICATION

(11) **EP 1 997 660 A2**
(43) Date of publication of application: **03.12.2008**
(21) Application number: 08157063.2
(22) Date of filing: 28.05.2008
(51) Int. Cl.: B60J 5/12

(54) **Door opening and closing apparatus for vehicle**

(30) Priority: 30.05.2007 JP 2007143838
(71) Applicant: AISIN SEIKI KABUSHIKI KAISHA, Kariya-shi, Aichi 448-8650 (JP)
(72) Inventor: SUZUKI, Shigeyuki c/o Aisin Seiki Kabushiki KK, Kariya-shi Aichi 448-8650 (JP); ISOMURA, Yukio c/o Aisin Seiki Kabushiki KK, Kariya-shi Aichi 448-8650 (JP)
(74) Representative: TBK-Patent

(57) **Abstract**

A door opening and closing apparatus for a vehicle for opening and closing a rear hatch (2) including a rear hatch main body (20) and a movable panel (30), the door opening and closing apparatus includes a lock portion (81) provided between the rear hatch main body and the movable panel, an actuating mechanism (60) provided between the rear hatch main body (20) and the movable panel (30) and causing the movable panel to move between a retracted position and an extended position, a controller (70) connected to the lock portion (81) and the actuating mechanism (60) and controlling the lock portion and the actuating mechanism so that the lock portion is unlocked and the movable panel (30) moves towards the retracted position, and a switch (11,12,13,14) connected to the controller and serving as a trigger for controlling the lock portion and the actuating mechanism by means of the controller.

## Description

### FIELD OF THE INVENTION

This invention generally relates to a door opening and closing apparatus for a vehicle. More particularly, this invention pertains to a door opening and closing apparatus for opening and closing a door such as a rear hatch provided in the rear of a vehicle.

### BACKGROUND

A known rear hatch includes an opening and closing member (i.e., rear hatch main body) that is hinged at the rear top of a vehicle body (i.e., supporting point) and opens upward, and a movable panel movable in upward and downward directions and accommodated within the opening and closing member when the rear hatch opens upward. Such rear hatch is disclosed in JP6008033U. Even when the opening and closing member is in a closed state, an opening connected to an interior of the vehicle is formed by the movable panel to be raised so that luggage is taken in and out through the opening. In the rear hatch disclosed, a first opening operation in which the opening and closing member is opened relative to the supporting point, and a second opening operation in which the movable panel is slidably raised (i,e., opened) are switchable by means of an outdoor handle that is rotatably operated. That is, the first opening operation and the second opening operation are switched therebetween on the basis of detection information from detecting means that detect a rotation angle of the outdoor handle.

According to the aforementioned rear hatch, a switch operation for unlocking and opening the opening and closing member is not linked to a switch operation for raising the movable panel, which leads to a complicated opening operation of the rear hatch. In addition, in cases where opening of the opening and closing member and raising of the movable panel are both performed, the opening and closing member is opened after the movable panel is completely raised, which requires a certain amount of time. A need thus exists for a door opening and closing apparatus for a vehicle that can realize an effective linkage operation between an unlocking of a rear hatch main body and an opening of a movable panel.

### SUMMARY OF THE INVENTION

According to an aspect of the present invention, a door opening and closing apparatus for a vehicle for opening and closing a rear hatch including a rear hatch main body and a movable panel, the rear hatch main body adapted to be provided in a rear portion of a vehicle body so as to pivotally rotate between a closed position and an open position, the movable panel slidably movable relative to a free end of the rear hatch main body, the door opening and closing apparatus includes a lock portion provided between the rear hatch main body and the movable panel the lock portion being locked for locking the rear hatch main body with the vehicle body, the lock portion being unlocked for allowing the rear hatch main body to open, an actuating mechanism provided between the rear hatch main body and the movable panel and causing the movable panel to move between a retracted position and an extended position, a controller connected to the lock portion and the actuating mechanism and controlling the lock portion and the actuating mechanism so that the lock portion is unlocked and the movable panel moves towards the retracted position, and a switch connected to the controller and serving as a trigger for controlling the lock portion and the actuating mechanism by means of the controller.

According to the aforementioned invention, the unlock operation of the lock portion and the retracting operation of the movable panel are automatically, i.e., simultaneously, operated by means of the switch operation. That is, the unlock operation of the lock operation and the retracting operation of the movable panel are performed by one switch operation to thereby simplify the operation of the rear hatch.

In addition, the controller controls the lock portion and the actuating mechanism so that the movable panel moves to the retracted position before the lock portion is unlocked.

Thus, the rear hatch main body is prevented from being opened without the movable panel to be retracted.

Further, the opening and closing apparatus includes a detecting portion connected to the controller and detecting that the rear hatch main body reaches the open position, wherein the controller controls a retracting operation of the movable panel on the basis that the detecting portion detects the open position of the rear hatch main body.

Therefore, the retracting operation of the movable panel and the opening operation of the rear hatch main body can be performed at the same time.

Furthermore, the controller finishes controlling the retracting operation of the movable panel at a time the rear hatch main body reaches the open position.

Thus, the vehicle can be parked with a minimum vehicle rear distance.

Furthermore, the actuating mechanism includes an electric motor serving as a drive source, the controller calculating a retract completion time for the movable panel to reach the retracted position based on a rotational speed of the electric motor, and comparing the calculated retract completion time with an open position arrival time estimated beforehand for the rear hatch main body to reach the open position from the closed position for controlling a locking or unlocking of the lock portion.

Thus, at a time of the rear hatch in the open state, the interference between the rear hatch and an object in the rear of the vehicle can be prevented.

### BRIEF DESCRIPTION OF THE DRAWINGS

The foregoing and additional features and characteristics of the present invention will become more apparent from the following detailed description considered with reference to the accompanying drawings, wherein:

Fig. 1 is a perspective view of a vehicle equipped with a door opening and closing apparatus for a vehicle according to an embodiment of the present invention;

Fig. 2 is a side view illustrating a schematic structure of a rear hatch including a panel actuating mechanism of a first example and also illustrating an operation locus of each of a rear hatch main body and a movable panel in a preventive control mode according to the embodiment of the present invention;

Fig. 3 is a side view illustrating a schematic structure of the rear hatch including the panel actuating mechanism of a second example and also illustrating the operation locus of each of the rear hatch main body and the movable panel in the preventive control mode according to the embodiment of the present invention;

Fig. 4 is a block diagram illustrating functions of a controller for the door opening and closing apparatus according to the embodiment of the present invention;

Fig. 5 is a diagram illustrating each positional state of the rear hatch main body and the movable panel;

Fig. 6A to 6F are schematic views illustrating positional states of the rear hatch main body and the movable panel;

Fig. 7 is a flowchart of a control when a retract switch is operated;

Fig. 8 is a flowchart of a control when an extend switch is operated;

Fig. 9 is a flowchart of a control when an open switch is operated;

Fig. 10 is a flowchart of a control when a close switch is operated;

Fig. 11 is a flowchart of a control when the close switch is operated according to another embodiment of the present invention;

Fig. 12 is a flowchart of a control when the open switch is operated according to still another embodiment of the present invention; and

Fig. 13 is a flowchart of a control when the rear hatch is closed according to the still another embodiment of the present invention.

### DETAILED DESCRIPTION

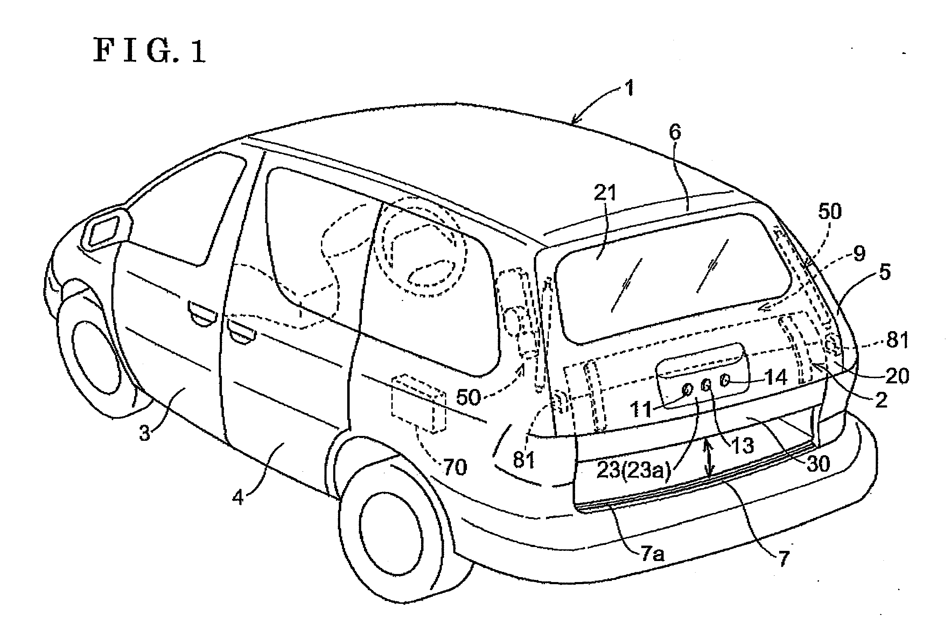

An embodiment of the present invention will be explained with reference to the attached drawings. Fig. 1 is a perspective view of a vehicle equipped with a door opening and closing apparatus according to the present embodiment as viewed from an obliquely rearward direction. The vehicle is of a five-door type having a rear hatch 2, front side doors 3, and rear side doors 4 all of which are provided at a vehicle body 1. The rear hatch 2 closes an opening portion 9 that is defined by a rear pillar 5, a roof rear edge 6, and a floor rear edge 7. Loading cargo into and out of an interior of the vehicle body 1 is made possible by opening the opening portion 9.

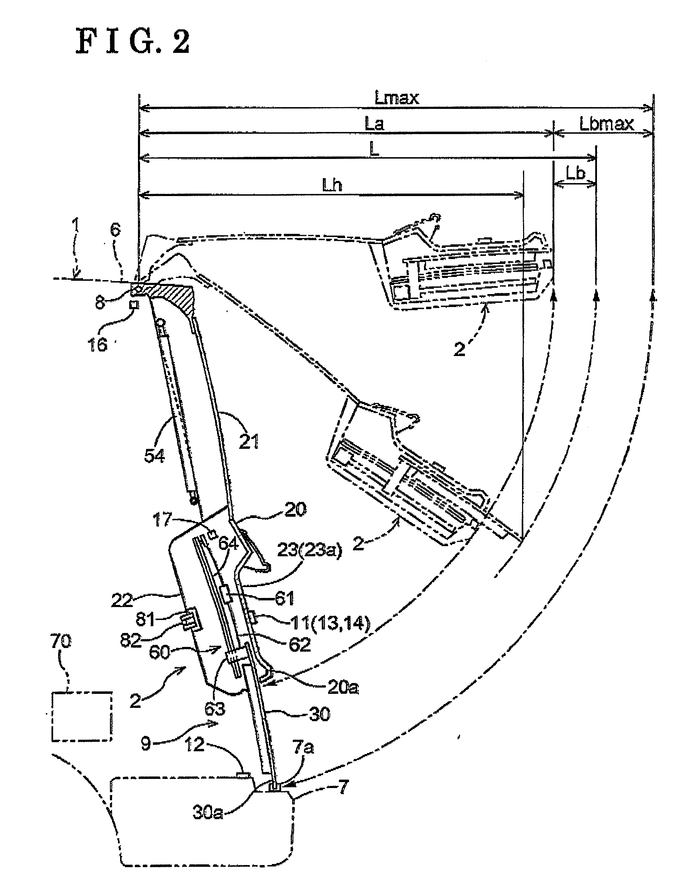

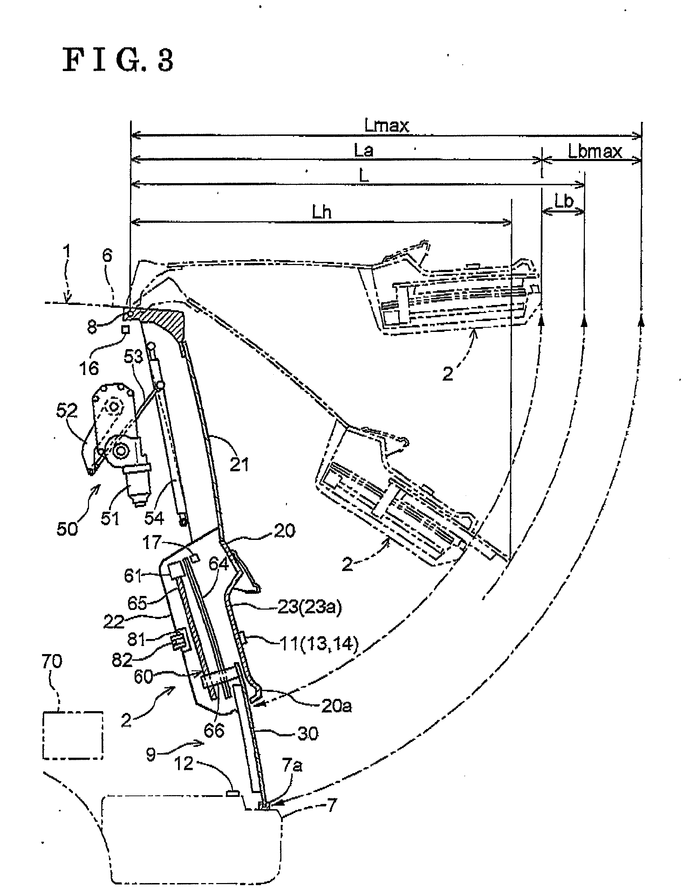

As seen from Figs. 2 and 3, the rear hatch 2 includes a rear hatch main body 20 and a movable panel 30. The movable panel 30 moves to extend from a free end 20a of the rear hatch main body 20 (i.e., slide open operation) and to return to the free end 20a (i.e., slide close operation). The rear hatch main body 20, which includes a rear window 21, is attached to the vehicle body 1 so as to be pivotally rotatable between a closed position and an open position (i.e., open and close pivoting operation) by means of a horizontal hinge provided at the roof rear edge 6. The open and close pivoting operation of the rear hatch main body 20 is performed only by a damper 54 as illustrated in Fig. 2 or is automatically performed by a rear hatch open and close driving mechanism 50 as illustrated in Fig. 3. The rear hatch open and close driving mechanism 50 includes a second motor 51 serving as a rear hatch drive motor, an arm 52 pivotally rotating by means of the second motor 51, and a rod 53 connecting a free end of the arm 52 and the rear hatch main body 20 to each other. In addition, the damper 54 is also provided for the open and close pivoting operation of the rear hatch main body 20.

The slide open and close operation of the movable panel 30 is automatically performed by a panel actuating mechanism 60 serving as an actuating mechanism provided at a void formed between an inner panel 22 and an outer panel 23 of the rear hatch main body 20. The panel actuating mechanism 60 according to a first example is of a reciprocating wire type as illustrated in Fig. 2. A first motor 61 serving as a panel drive motor functions as a wire drive motor. Thus, the panel actuating mechanism 60 of the reciprocating wire type includes the first motor 61, a wire 62 wound in one direction or the other direction by means of forward or reverse rotations of the first motor 61, a roller body 63 fixed to the wire 62 and moving up and down while the wire 62 is wound in one direction or the other direction, and a guide rail 64 guiding the up and down movement of the roller body 63. The movable panel 30 is connected to the roller body 63 so as to move up and down in association with the movement of the roller body 63. The panel actuating mechanism 60 according to a second example is of a feed screw type as illustrated in Fig. 3. The first motor 61 serving as the panel drive motor functions as a feed screw drive motor. Thus, the panel actuating mechanism 60 of the feed screw type includes the first motor 61, a feed screw 65 rotating by means of the first motor 61, a roller body 66 connected to the movable panel 30 and engaging with the feed screw 65, and the guide rail 64 guiding the up and down movement of the roller body 66.

In order to retain the closed state of the rear hatch main body 20, a door lock apparatus 81 serving as a lock portion of the rear batch main body 20 is arranged at the inner panel 22 of the rear hatch 2. Then, a striker 82 engageable with the door lock apparatus 81 is provided at a body panel of the vehicle body 1. A locked state (i.e., locking) and an unlocked state (i.e., unlocking) of the door lock apparatus 81 are controllable by a controller 70. That is, the door lock apparatus 81 is brought to the unlocked state by an operation of an open switch 11 so as to allow the rear hatch main body 20 to pivotally rotate to open. In addition, a switch detecting the locked state and the unlocked state of the door lock apparatus 81 is provided within the door lock apparatus 81. A detection signal of the switch is sent to the controller 70. A portion of the outer panel 23 of the rear hatch main body 20 is formed as an operation panel 23a. The open switch 11, a retract switch 13, and an extend switch 14 are provided at the operation panel 23a. The open switch 11 brings the rear hatch main body 20 to pivotally rotate to open from the closed state. The retract switch 13 brings the movable panel 30 to move from an extended position (i.e., closed position) to a retracted position (i.e., open position) where the movable panel 30 is stored within the rear hatch main body 20. The extend switch 14 brings the movable panel 30 to move from the retracted position to the extended position. A close switch 12 for bringing the rear hatch main body 20 to pivotally rotate to close from the open state is provided at each of the floor rear edge 7, the rear hatch main body 20, and a driver seat panel.

According to the present embodiment, in order to enhance the sealing performance between the movable panel 30 and the floor rear edge 7, a recess portion 7a is formed at the floor rear edge 7 so as to receive a tip end portion 30a of the movable panel 30. In such structure, in cases where the rear hatch 2 is brought to pivotally rotate to open from the closed state, the movable panel 30 is first operated. That is, after the tip end portion 30a of the movable panel 30 disengages from the recess portion 7a, the door lock apparatus 81 is unlocked so that the rear hatch main body 20 is brought to pivotally rotate. In addition, in cases where the rear hatch 2 is brought to pivotally rotate to close from the open state, the rear hatch main body 20 pivotally rotates while the tip end portion 30a of the movable panel 30 is retained at a position where the tip end portion 30a is prevented from engaging or contacting with the recess portion 7a. Afterwards, the tip end portion 30a of the movable panel 30 moves to engage with the recess portion 7a.

The movable panel 30 is formed to extend over an entire width of the free end 20a of the rear hatch main body 20. In a state where the movable panel 30 extends from the free end 20a of the rear hatch main body 20, the movable panel 30 forms a lower half of the rear hatch 2. On the other hand, in a state where the movable panel 30 is stored within the rear hatch main body 20, the rear hatch 2 is substantially formed by only the rear hatch main body 20 when viewed from the outside. Accordingly, a length La of the rear hatch main body 20 is equal to a radius of the pivoting operation of the rear hatch 2 (i.e., pivoting operation locus of a tip end of the rear hatch 2) in cases where the movable panel 30 is stored within the rear hatch main body 20. On the other hand, in cases where the movable panel 30 extends at a maximum from the free end 20a of the rear hatch main body 20, a length Lmax obtained by adding a maximum extension length Lbmax of the movable panel 30 to the length La of the rear hatch main body 20 is equal to the radius of the pivoting operation of the rear hatch 2.

According to the door opening and closing apparatus of the present embodiment, provided is a control mode in which the rear hatch main body 20 pivotally rotates to open while the movable panel 30 is shifted from the extended position to the retracted position. Thus, the radius of the pivoting operation locus of the tip end of the rear hatch 2, i.e., a length L, is obtained by adding an extension length of the movable panel 30 sequentially reduced, i.e., a length Lb, to the length La of the rear hatch main body 20. That is, the pivoting operation locus of the tip end of the rear hatch 2 does not form an arc shape. In cases where an upright object is present in the rear of the vehicle, a minimum space (i.e., horizontal length) required for the rear hatch 2 to pivotally rotate to open is equal to the length La of the rear hatch main body 20. In order to bring the rear hatch 2 to pivotally rotate within the minimum space while the rear hatch main body 20 and the movable panel 30 are simultaneously operated, operations of the rear hatch main body 20 and the movable panel 30 are controlled in such a way that a vehicle rear distance Lh that is defined as a horizontal distance between the tip end of the movable panel 30 and a pivotal point of the rear hatch main body 20 does not exceed the length La. In order to bring the rear hatch 2 to pivotally rotate within a narrow or limited space, the retracting operation of the movable panel 30 is desirably completed before the rear hatch main body 20 reaches an open position where the rear hatch main body 20 is horizontally arranged. Such control is hereinafter called a preventive control mode. As a superior control mode of the preventive control mode, provided is a basic control mode in which the rear hatch main body 20 is allowed to open after the door lock apparatus 81 is unlocked, and the movable panel 30 is allowed to move to the retracted position by means of the first motor 61. The basic control mode is also available when the rear hatch main body 20 is manually operated to pivotally rotate.

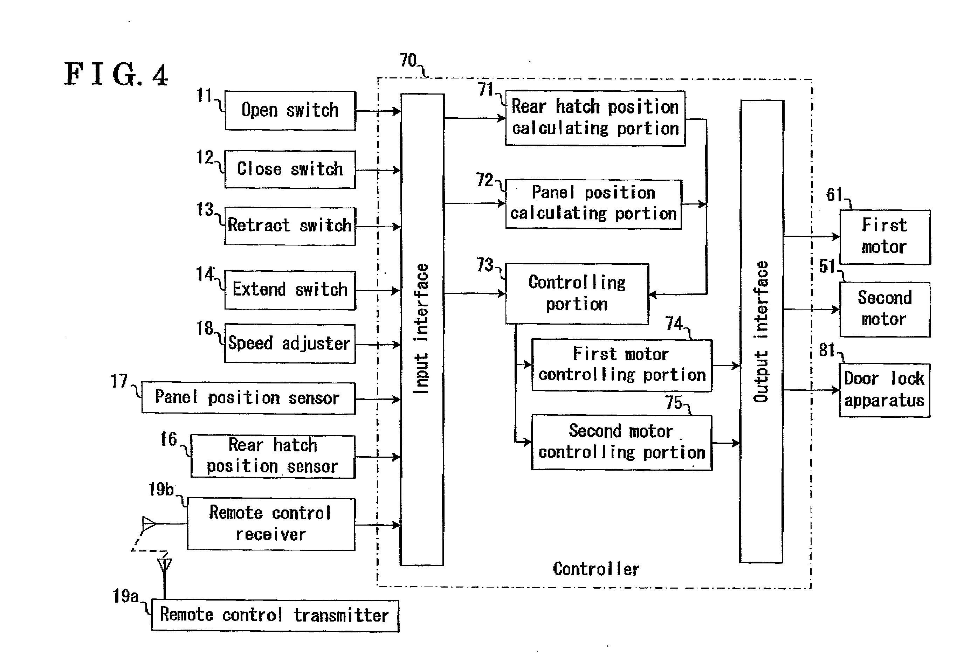

An operation control of the rear hatch 2 having the aforementioned structure is performed by the controller 70 mounted within the vehicle body 1, As illustrated in Fig. 4, the open switch 11, the close switch 12, the retract switch 13, and the extend switch 14 are all connected to the controller 70 as input devices. In order to precisely perform operations of the rear hatch main body 20 and the movable panel 30 in the basic control mode or the preventive control mode, a rear hatch position sensor 16 and a panel position sensor 17 each serving as a detecting portion for detecting a position of the rear hatch main body 20 that is pivotally opened (i.e., pivotal position) are also connected to the controller 70. The rear hatch position sensor 16 is provided in the vicinity of a hinge 8 or within the second motor 51 for detecting the pivotal position of the rear hatch main body 20. The panel position sensor 17 is provided at the void between the inner panel 22 and the outer panel 23 of the rear hatch main body 20 or within the first motor 61 for detecting a moving amount of the movable panel 30. Further, according to the present embodiment, a open and close pivoting operation speed of the rear hatch main body 20 is adjustable. That is, a speed adjuster 18 manually settable is also connected to the controller 70. Furthermore, as output devices, the second motor 51 that drives the rear hatch main body 20 to pivotally rotate to open or close, the first motor 61 that drives the movable panel 30 to move to the extended position or retracted position, and the door lock apparatus 81 are connected to the controller 70.

In order to cause the rear hatch 2 to open and close at a distance from the vehicle, a remote control transmitter 19a is provided to have functions of the open switch 11, the close switch 12, the retract switch 13, the extend switch 14, and the speed adjuster 18. Then, a remote control receiver 19b is connected to the controller 70 so as to generate a signal equivalent to an input signal of each switch 11, 12, 13, or 14 in response to a signal from the remote control transmitter 19a.

The controller 70 is substantially constituted by a microcomputer. Various functions of the controller 70 are achieved by program and/or hardware. As for functions specifically related to the present embodiment, provided are a rear hatch position calculating portion 71, a panel position calculating portion 72, a controlling portion 73, a first motor controlling portion 74, a second motor controlling portion 75, and the like. The rear hatch position calculating portion 71 calculates the pivotal position of the rear hatch main body 20 based on the input signal from the rear hatch position sensor 16. The panel position calculating portion 72 calculates a position of the movable panel 30 that is slidably operated (i.e., sliding position) based on the input signal from the panel position sensor 17. The control portion 73 realizes the linked operation between the rear hatch main body 20 and the movable panel 30. The first motor control portion 74 generates a drive signal sent to the first motor 61. The second motor control portion 75 generates a drive signal sent to the second motor 51.

The control portion 73 gives a control command (i.e., control level) to each of the first motor control portion 74 and the second motor control portion 75, by following a predetermined algorithm, based on the input signal from each of the open switch 11, the close switch 12, the retract switch 13, the extend switch 14, and the speed adjuster 18, and based on the position of each of the rear hatch main body 20 and the movable panel 30, which will be explained later in detail.

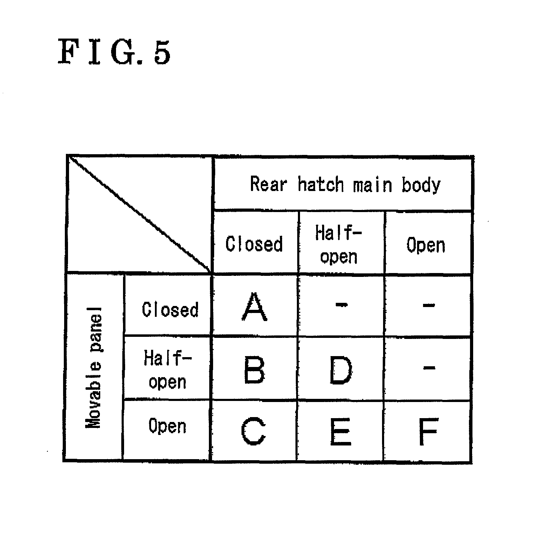

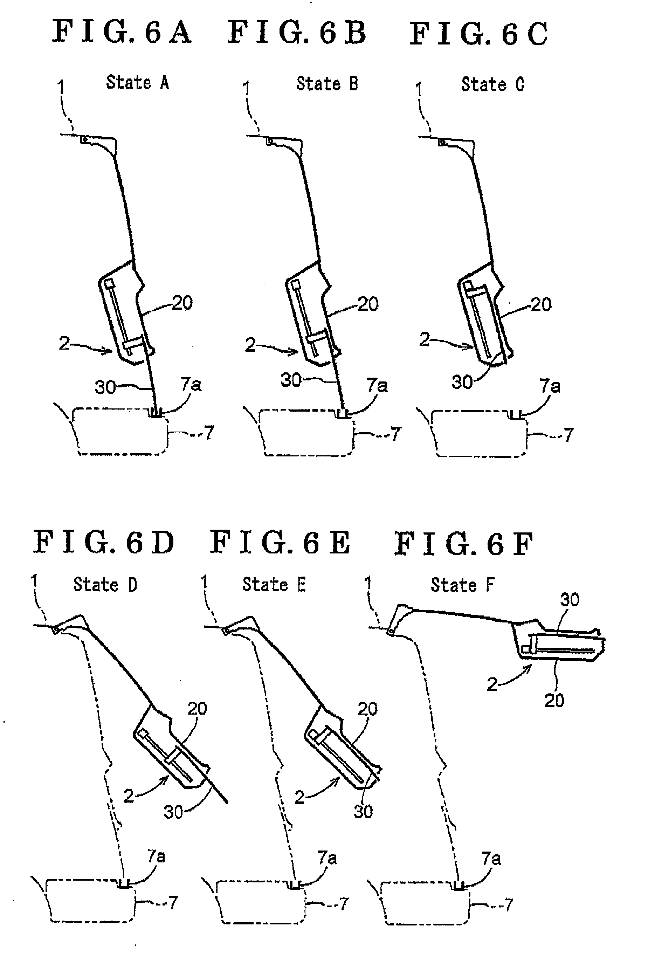

According to the aforementioned door opening and closing apparatus, the rear hatch open and close driving mechanism 50 and the panel actuating mechanism 60 are individually operative. Thus, the rear hatch 2 can be in various positional states depending on the pivotal position of the rear hatch main body 20 and the sliding position of the movable panel 30. The various positional states of the rear hatch 2 are classified into such a manner as illustrated in a table of Fig. 5. In addition, the positional states classified are schematically illustrated in Figs. 6A to 6F. Specifically, as illustrated in Fig. 5, the positional states of the rear hatch may body 20 are classified into a state where the rear hatch main body 20 is driven to pivotally rotate to the closed position (i.e., closed state), a state where the rear hatch main body 20 is driven to pivotally rotate to the fully open position (i.e., open state), and a state where the rear hatch main body 20 is not in the closed position or the fully open position (i.e., half-open state). The positional states of the movable panel 30 are classified into a state where the movable panel 30 extends until the tip end portion 30a of the movable panel 30 enters within the recess portion 7a (i.e., closed state), a state where the movable panel 30 fully moves to the retracted position (i.e., open state), a state where the movable panel 30 is not in the extended position or the retracted position (i.e., half-open state). Then, a state A in Fig. 6A illustrates a state where the movable panel 30 is in the closed state while the rear hatch main body 20 is in the closed state. A state B in Fig. 6B illustrates a state where the movable panel 30 is in the half-open state while the rear hatch main body 20 is in the closed state. A state C in Fig. 6C illustrates a state where the movable panel 30 is in the open state while the rear hatch main body 20 is in the closed state. Further, a state D in Fig. 6D illustrates a state where the movable panel 30 is in the half-open state while the rear hatch main body 20 is in the half-open state. A state E in Fig. 6E illustrates a state where the movable panel 30 is in the open state while the rear hatch main body 20 is in the half open state. A state F in Fig. 6F illustrates a state where the movable panel 30 is in the open state while the rear hatch main body 20 is in the open state. According to the present embodiment, the rear hatch main body 20 is never driven to pivotally rotate while the movable panel 30 is in the closed position. Thus, a state where the rear hatch main body 20 is in the half-open or open state with the movable panel 30 in the closed state does not exist. In the same way, since the movable panel 30 is retracted before the rear hatch main body 20 is driven to pivotally rotate to the fully open position, a state where the movable panel 30 is in the half-open state with the rear hatch main body 20 in the open state does not exist.

The rear hatch main body 20 is driven to pivotally rotate by an operation of the open switch 11 or the close switch 12. The movable panel 30 is driven to slidably move by an operation of the retract switch 13 or the extend switch 14. In this case, however, a control procedure is different depending on the aforementioned positional states of the rear hatch main body 20 and the movable panel 30 before the operation of each switch. Next, a control flow upon operation of each switch will be explained.

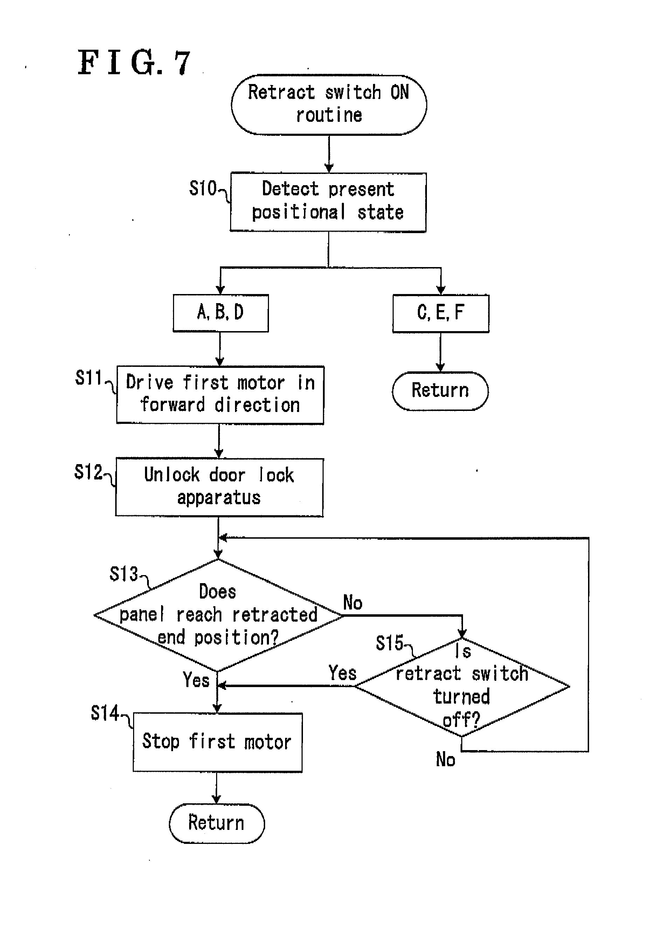

The control procedure in a state where the retract switch 13 is turned on will be explained with reference to Fig. 7. When the retract switch 13 is turned on, the control portion 73 detects the present positional state (i.e., aforementioned states A to F) of the rear hatch 2 based on input signals from various sensors in step 10. In the state C, E, or F, the movable panel 30 is already completely retracted and thus the present routine is terminated without any action. In the state A, B, or D, the movable panel 30 extends to some degree from the retracted position. Thus, the first motor 61 is driven in a forward direction to move (i.e., to raise) the movable panel 30 in a retracting direction in step 11 (i.e., retracting operation). Further, the locked state between the rear hatch main body 20 and the vehicle body 1 is released by unlocking the door lock apparatus 81 in step 12 (i.e., unlock operation). That is, in association with the turning on of the retract switch 13, the unlock operation by the door lock apparatus 81 serving as the lock portion between the rear hatch main body 20 and the vehicle body 1 and the retracting operation by the movable panel 30 are automatically, i.e., simultaneously, performed at the same time. Then, it is determined whether or not the movable panel 30 reaches a retracted end position in step 13. When it is determined that the movable panel 30 reaches the retracted end position, the driving of the first motor 61 is stopped in step 14 to thereby terminate the present routine. According to the present embodiment, the door lock apparatus 81 is unlocked when the movable panel 30 starts moving in the retracting direction in step 11. Alternatively, the door lock apparatus 81 may be unlocked after the movable panel 30 reaches the retracted end position. Consequently, the opening of the rear hatch 2 without the movable panel 30 to be retracted can be forcedly avoided. Specifically, the opening portion 9 can be partially opened relative to the vehicle body 1 by the operation of the retract switch 13 in the state A as a lower area of the rear hatch 2 is opened by a certain height without opening the rear hatch main body 20. Small luggage or small animals can be taken in and out through the opening portion 9, accordingly. Unless the movable panel 30 reaches the retracted end position, it is further determined whether or not the retract switch 13 is turned off in step 15. In cases where it is determined that the retract switch 13 is not yet turned off, the process returns to step 13 so as to continue raising the movable panel 30. In cases where the retract switch 13 is turned on, the driving of the first motor 61 is stopped in step 14 to thereby cancel the movement of the movable panel 30.

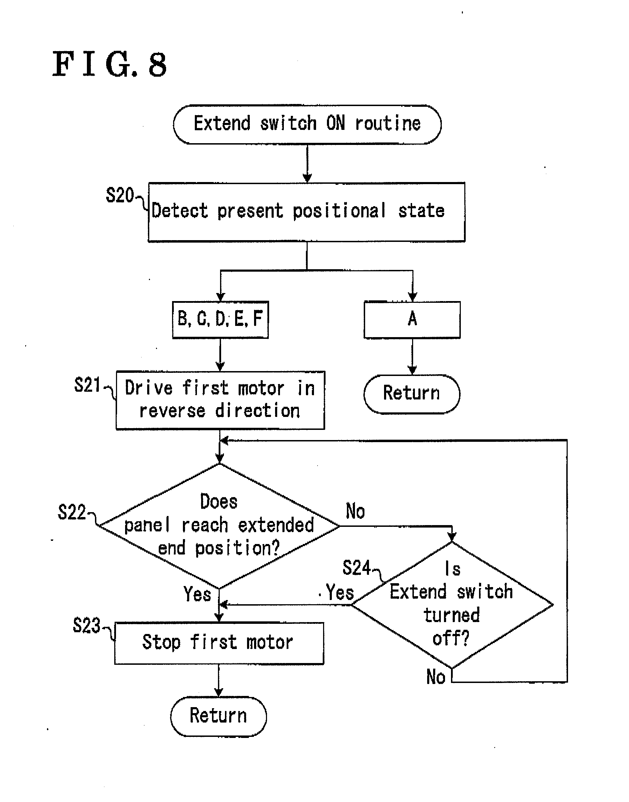

The control procedure in a state where the extend switch 14 is turned on will be explained with reference to Fig. 8. When the extend switch 14 is turned on, the present positional state of the rear hatch 2 is detected in step 20. In the state A, the movable panel 30 reaches an extended end position as already completely extended. Thus, the present routine is terminated without any action. In the state B, D, E, F, or C, the movable panel 30 is retracted to some degree from the extended end position. Thus, the first motor 61 is driven in a reverse direction to move (i.e., lower) the movable panel 30 in the extending direction in step 21. It is determined whether or not the movable panel 30 reaches the extended end position in step 22. When it is determined that the movable panel 30 reaches the extended end position, the driving of the first motor 61 is stopped in step 23 so as to terminate the present routine. Unless the movable panel 30 reaches the extended end position, it is determined whether or not the extend switch 14 is turned off. In cases where it is determined that the extend switch 14 is not yet turned off in step 24, the process returns to step 22 so as to continue the reverse driving of the first motor 61 and to continue lowering the movable panel 30. In cases where it is determined that the extend switch 14 is turned off in step 24, the driving of the first motor 61 is stopped in step 23 to thereby cancel the movement of the movable panel 30.

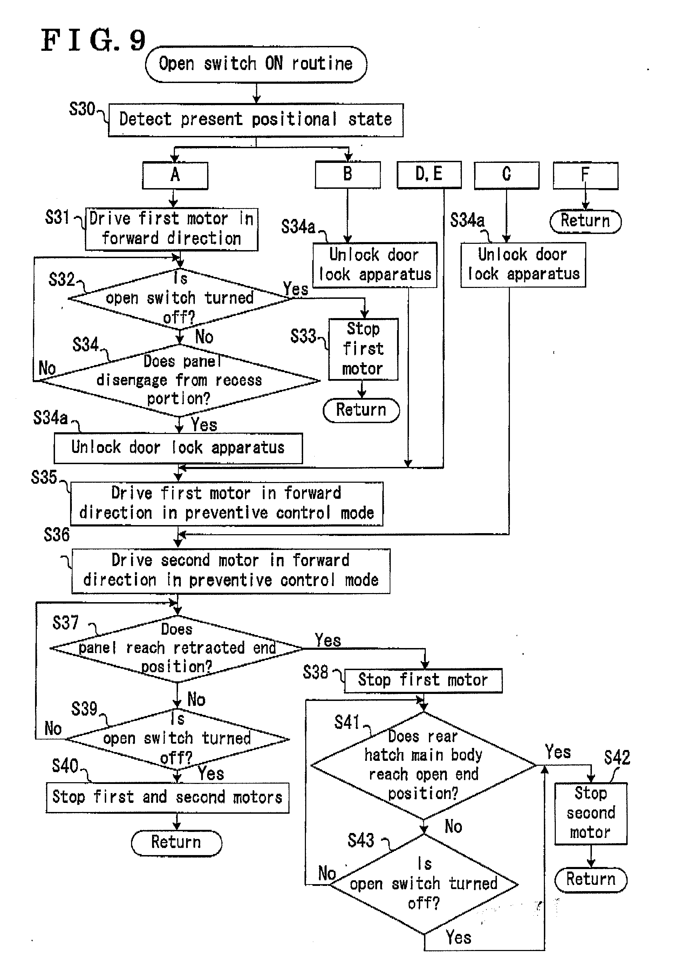

The control procedure in a state where the open switch 11 is turned on will be explained with reference to Fig. 9. When the open switch 11 is turned on, the control portion 73 detects the present positional state (i.e., aforementioned states A to F) of the rear hatch 2 based on input signals from various sensors in step 30. In the state A, the rear hatch 2 is completely closed. Thus, in order to disengage the movable panel 30 from the recess portion 7a, the first motor 61 is driven in the forward direction in step 31. When it is determined that the open switch 11 is turned off in step 32, the driving of the first motor 61 is stopped in step 33 so as to terminate the present routine. Unless the open switch 11 is turned off, the forward driving of the first motor 61 is continued until the movable panel 30 disengages from the recess portion 7a. In step 34, the control portion 73 determines the disengagement of the movable panel 30 from the recess portion 7a based on the sliding position of the movable panel 30, or the driving time or position of the first motor 61. Then, the door lock apparatus 81 is unlocked in step 34a. When it is determined that the movable panel 30 disengages from the recess portion 7a in step 34, the control portion 73 selects the aforementioned preventive control mode so that the movable panel 30 is completely retracted before the rear hatch main body 20 reaches the open position where the rear hatch main body 20 is horizontally positioned, and that the rear hatch 2 including the movable panel 30 can pivotally rotate to open within a space necessary for the pivoting open operation of the rear hatch main body 20. Accordingly, the control portion 73 sends a control signal to the first motor control portion 74 and the second motor control portion 75 so as to achieve the linked operation between the rear hatch main body 20 and the movable panel 30. The first motor 61 is driven in the forward direction in the preventive control mode based on a drive signal from the first motor control portion 74 in step 35. In the same way, the second motor 51 is driven in the forward direction in the preventive control mode based on a drive signal from the second motor control portion 75 in step 36.

Next, it is determined whether or not the movable panel 30 reaches the retracted end position in step 37. When it is determined that the movable panel 30 does not reach the retracted end position, then it is determined whether or not the open switch 11 is turned off in step 39. When it is determined that the open switch 11 is not yet turned off, the process returns to step 37 so as to continue the pivoting open operation of the rear hatch main body 20 and the slide open operation of the movable panel 30. When it is determined that the open switch 11 is turned off, the driving of each of the second motor 51 and the first motor 61 is stopped in step 40 so as to cancel the open operation of the rear hatch 2, The present routine is terminated accordingly. When it is determined that the movable panel 30 reaches the retracted end position in step 37, the first motor 61 is stopped in step 38. Next, it is determined whether or not the rear hatch main body 20 is driven to pivotally rotate to an open end position in step 41. When it is determined that the rear hatch main body 20 reaches the open end position, the second motor 51 is stopped in step 42 to thereby terminate the present routine. When it is determined that the rear hatch main body 20 does not reach the open end position, it is further determined whether or not the open switch 11 is turned off in step 43. When the open switch 11 is not yet turned off, the process returns to step 41 so as to continue the pivoting open operation of the rear hatch main body 20. When the open switch 11 is turned off, the driving of the second motor 51 is stopped in step 42 so that the open operation of the rear hatch main body 20 is cancelled. The present routine is terminated accordingly.

In cases where the state B is detected in step 30 where the present positional state of the rear hatch 2 is detected, the aforementioned steps 31 to 34 are omitted since the movable panel 30 is already in the half-open state. The first motor 61 and the second motor 51 are each started to be driven in the forward direction in the preventive control mode in step 35 and step 36 after the unlocking of the door lock apparatus 81 in step 34a. In cases where the state D or E is detected in step 30, the rear hatch main body 20 is in the half-open state and thus the door lock apparatus 81 is in the unlocked state. Thus, the forward driving of each of the first motor 61 and the second motor 51 is started in the preventive control mode in step 35 and step 36.

In cases where the state C is detected in step 30, the movable panel 30 is already in the open state (i.e., fully retracted position). Thus, the aforementioned steps 31 to 34 and step 35 in which the first motor 61 is driven in the forward direction in the preventive control mode are omitted. After the door lock apparatus 81 is unlocked in step 34a, the forward driving of the second motor 51 is started in the preventive control mode in step 36.

In cases where the state F is detected in step 30, each of the movable panel 30 and the rear hatch main body 20 is already in the open position. Thus, the present routine is terminated without any action.

Accordingly, the appropriate operation of the open switch 11 allows to open the rear batch 2 including the movable panel 30 and to stop the rear hatch 2 at an arbitrary angle within the space for the pivoting rotation of only the rear hatch main body 20.

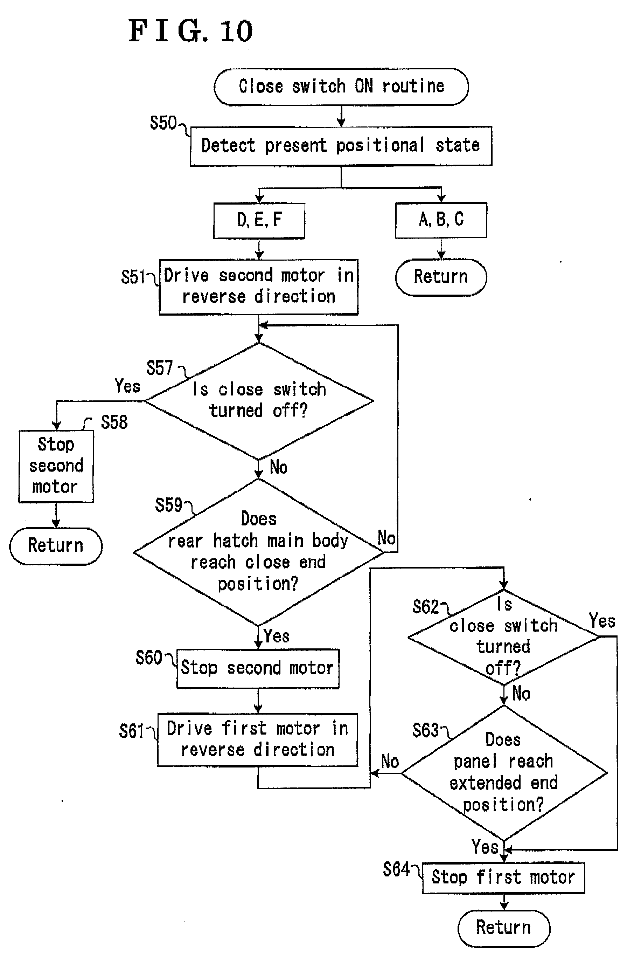

Next, the control procedure in a state where the close switch 12 is turned on will be explained with reference to Fig. 10. When the close switch 12 is turned on, the present positional state (i.e., aforementioned states A to F) of the rear hatch 2 is detected in step 50. In cases where the state A, B or C is detected, the rear hatch main body 20 is already in the closed position and thus the present routine is terminated without any action.

In cases where the state D, E, or F is detected in step 50, the movable panel 30 and the rear hatch main body 20 are both in the half-open or closed position. Thus, the second motor 51 is driven in the reverse direction in step 51, The driving of the second motor 51 is continued until the rear hatch main body 20 pivotally downwardly rotates to a close end position. In this case, it is determined whether or not the close switch 12 is turned off in step 57. When it is determined that the close switch 12 is turned off, the driving of the second motor 51 is stopped in step 58 so as to terminate the present routine. Unless the close switch 12 is turned off, the pivotal position of the rear hatch main body 20 is checked or determined. When it is determined that the rear hatch main body 20 reaches the close end position in step 59, the driving of the second motor 51 is stopped so that the operation of the rear hatch main body 20 is stopped in step 60. Accordingly, the rear hatch main body 20 and the movable panel 30 are brought to the state C. Next, the first motor 61 is driven in the reverse direction in the basic control mode in step 61 so that the tip end portion 30a of the movable panel 30 is fully inserted into the recess portion 7a to thereby achieve the fully closed state of the rear hatch 2. At this time, it is determined whether or not the close switch 12 is turned off in step 62. When it is determined that the close switch 12 is turned off, the driving of the first motor 61 is stopped in step 64 so as to terminate the present routine. Unless the close switch 12 is turned off, the operation of the movable panel 30 in the downward direction (i.e., extending operation) is continued.. When it is determined that the tip end portion 30a of the movable panel 30 is completely inserted into the recess portion 7a and thus the movable panel 30 reaches the extended end position in step 63, the driving of the first motor 61 is stopped in step 64 so as to terminate the present routine.

According to the aforementioned embodiment, the pivotally rotational speed of the rear hatch main body 20 is changeable by means of an operation of the speed adjuster 18. In response to a signal from the speed adjuster 18, the controlling portion 73 switches tables for reading control values sent to the first motor controlling portion 74 and the second motor controlling portion 75, with parameters of the pivotal position of the rear hatch main body 20 and the sliding position of the movable panel 30. In each table, the control values for operating the rear hatch main body 20 and the movable panel 30 in the preventive control mode in response to the pivotally rotational speed of the rear hatch main body 20 are recorded.

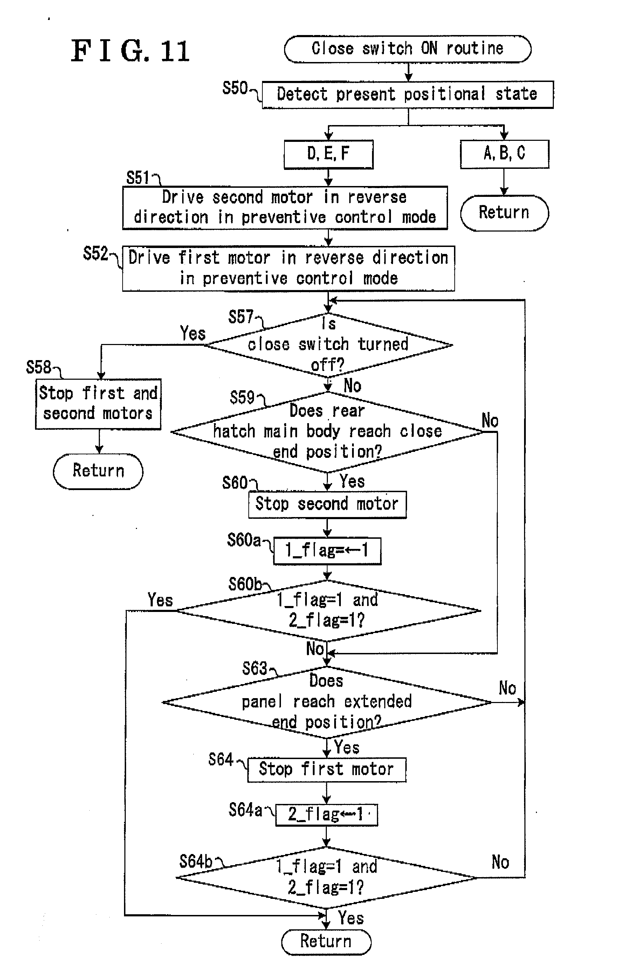

According to the aforementioned embodiment, the recess portion 7a into which the tip end portion 30a is inserted is provided at the floor end portion 7b. Thus, the interference between the tip end portion 30a of the movable panel 30 and the recess portion 7a should be avoided in the pivoting operation of the rear hatch main body 20. However, according to a structure where such recess portion 7a is not provided, the operation of the rear hatch main body 20 may be further simplified. For example, in the control procedure for the open switch to be turned on, steps 31 to 34 for disengaging the tip end portion 30a of the movable panel 30 from the recess portion 7a in Fig. 9 can be omitted. In addition, in the control procedure for the close switch 12 to be turned on, which is illustrated in Fig. 11 as another embodiment, each of the second motor 51 and the first motor 61 is driven in the reverse direction in the preventive control mode in steps 51 and 52, respectively. Then, it is determined whether or not the close switch is turned off in step 57, whether or not the rear hatch main body 20 reaches the close end position in step 59, and whether or not the movable panel 30 reaches the extended end position in step 63. When the close switch is turned off, the driving of each of the second motor 51 and the first motor 61 is stopped in step 58 so as to terminate the present routine. When it is determined that the rear hatch main body 20 reaches the close end position in step 59, the driving of the second motor 51 is stopped in step 60. Then, 1 (one) is assigned to a flag 1_flag in step 60a. When it is determined that the movable panel 30 reaches the extended end position in step 63, the driving of the first motor 61 is stopped in step 64. Then, 1 (one) is assigned to a flag 2_flag in step 64a. Steps 60b and 64b in which it is determined whether or not both of the flag 1_flag and the flag 2_flag are assigned by one are provided to terminate the present routine when both of the second motor 51 and the first motor 61 are stopped, i.e., the rear hatch 2 is completely closed.

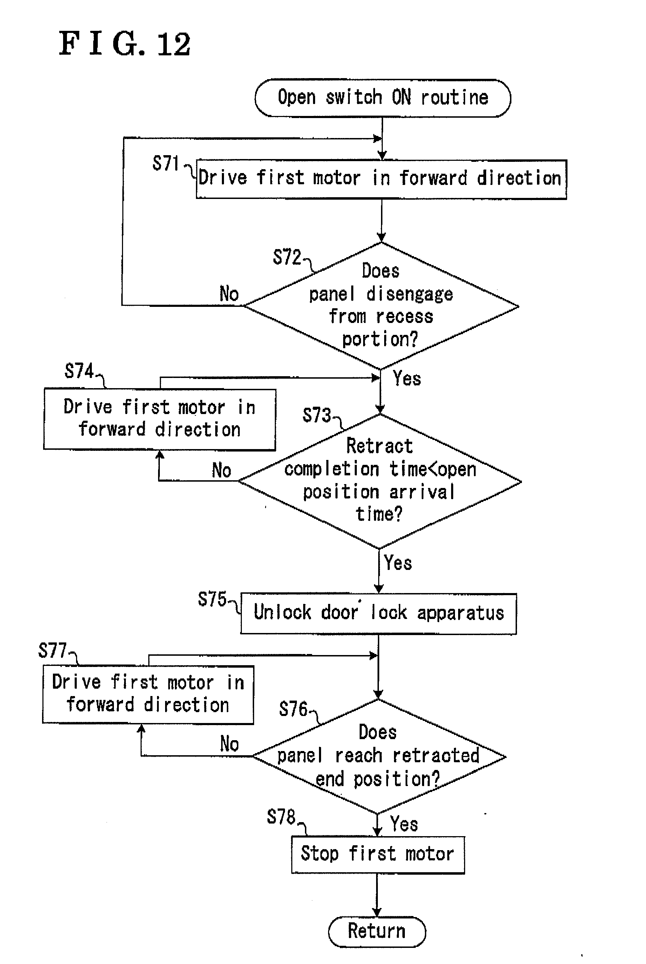

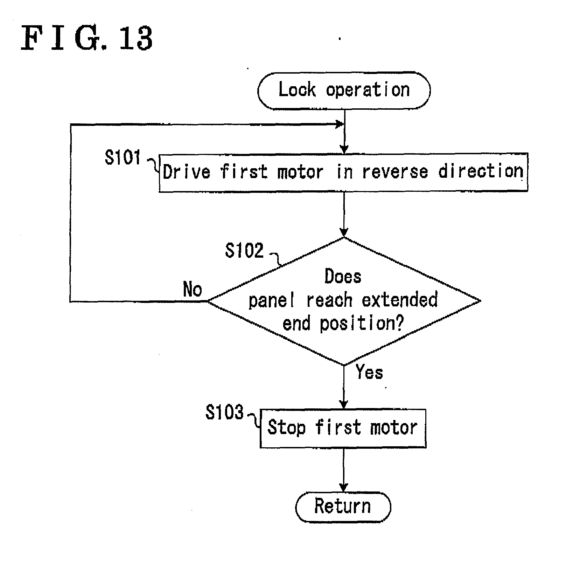

According to the door opening and closing apparatus that opens and closes the rear hatch 2 only by means of the damper 54 as illustrated in Fig. 2, depending on the rotational speed of the first motor 61 that drives the movable panel 30 to be retracted, the movable panel 30 may not be fully retracted into the free end 20a of the rear hatch main body 20 by the time the rear hatch main body 20 reaches the open position where the rear hatch main body 20 is horizontally arranged. For example, the decrease in the drive voltage of the first motor 61 may induce the decrease in the rotational speed of the first motor 61. In such case, the rear hatch 2 may interfere with an object positioned in the rear of the vehicle in a state where the rear hatch 2 is in the open position at which the rear hatch main body 20 is horizontally positioned. In order to solve such problem, the open operation of the rear hatch 2 is performed on the basis of a flow illustrated in Fig. 12 as still another embodiment. That is, after the open switch 11 is turned on, the first motor 61 is driven in the forward direction in step 71. It is determined whether or not the tip end portion 30a of the movable panel 30 disengages from the recess portion 7a in step 72. When it is determined that the tip end portion 30a disengages from the recess portion 7a, the rotational speed of the first motor 61 is then detected, and a time from the disengagement of the movable panel 30 from the recess portion 7a to the completion of retraction into the free end 20a (i.e., retract completion time Ta) is calculated on the basis of the detected rotational speed of the first motor 61. Further, in step 73, the calculated retract completion time Ta is compared with a time for the rear hatch main body 20 to move from the closed position to the open position (open position arrival time Tb) that is estimated and stored beforehand by the control portion. When it is determined that the value Ta is equal to or greater than the value Tb (i.e., Ta≥Tb), the unlocking of the door lock apparatus 81 is not performed. The first motor 61 is driven in the forward direction so as to move the movable panel 30 in step 74. The position of the movable panel 30 and the latest retract completion time at that time are calculated at a predetermined timing. In cases where the latest retract completion time is shorter than the arrival time of the rear hatch main body 20 to the open position from the closed position, the door lock apparatus 81 is unlocked in step 75. Afterwards, the rear hatch main body 20 is operated to open by means of the damper 54, and it is determined whether or not the movable panel 30 is completely retracted in step 76. Until the movable panel 30 is completely retracted, the forward driving of the first motor 61 is continued in step 77. When the movable panel 30 is completely retracted, the first motor 61 is stopped in step 78 so as to terminate the present routine. In the close operation of the rear hatch 2 according to such door opening and closing apparatus, the rear hatch main body 20 is closed by hand against the extension force of the damper 54 and a lock operation is performed on the basis of a flow illustrated in Fig. 13. That is, the first motor 61 is driven in the reverse direction in step 101, which is continued unless the movable panel 30 reaches the extended end position in step 102. When the movable panel 30 reaches the extended end position, the driving of the first motor 61 is stopped in step 103 so as to terminate the present routine.

According to the aforementioned embodiment, the door opening and closing apparatus is used for the rear hatch of the vehicle. Alternatively, the door opening and closing apparatus may be used for a multi-stage pivotally opening and closing door unit of a truck or other means than the vehicle.
A door opening and closing apparatus for a vehicle for opening and closing a rear hatch (2) including a rear hatch main body (20) and a movable panel (30), the door opening and closing apparatus includes a lock portion (81) provided between the rear hatch main body and the movable panel, an actuating mechanism (60) provided between the rear hatch main body (20) and the movable panel (30) and causing the movable panel to move between a retracted position and an extended position, a controller (70) connected to the lock portion (81) and the actuating mechanism (60) and controlling the lock portion and the actuating mechanism so that the lock portion is unlocked and the movable panel (30) moves towards the retracted position, and a switch (11,12,13,14) connected to the controller and serving as a trigger for controlling the lock portion and the actuating mechanism by means of the controller.

## Claims

1. A door opening and closing apparatus for a vehicle for opening and closing a rear hatch (2) including a rear hatch main body (20) and a movable panel (30), the rear hatch main body (20) adapted to be provided in a rear portion of a vehicle body (1) so as to pivotally rotate between a closed position and an open position, the movable panel (30) slidably movable relative to a free end (20a) of the rear hatch main body (20), the door opening and closing apparatus comprising:
a lock portion (81) provided between the rear hatch main body (20) and the movable panel (30), the lock portion (81) being locked for locking the rear hatch main body (20) with the vehicle body (1), the lock portion (81) being unlocked for allowing the rear hatch main body (20) to open;
an actuating mechanism (60) provided between the rear hatch main body (20) and the movable panel (30) and causing the movable panel to move between a retracted position and an extended position;
a controller (70) connected to the lock portion (81) and the actuating mechanism (60) and controlling the lock portion (81) and the actuating mechanism (60) so that the lock portion is unlocked and the movable panel (30) moves towards the retracted position; and
a switch (11,12,13,14) connected to the controller (70) and serving as a trigger for controlling the lock portion (81) and the actuating mechanism (60) by means of the controller (70).

2. The door opening and closing apparatus according to claim 1, wherein the controller (70) controls the lock portion (81) and the actuating mechanism (60) so that the movable panel (30) moves to the retracted position before the lock portion (81) is unlocked.

3. The door opening and closing apparatus according to claim 1, further comprising a detecting portion (16,17) connected to the controller (70) and detecting that the rear hatch main body (20) reaches the open position, wherein the controller (70) controls a retracting operation of the movable panel (30) on the basis that the detecting portion (16, 17) detects the open position of the rear hatch main body (20).

4. The door opening and closing apparatus according to claim 3, wherein the controller (70) finishes controlling the retracting operation of the movable panel (30) at a time the rear hatch main body (20) reaches the open position.

5. The door opening and closing apparatus according to claim 1, wherein the actuating mechanism (60) includes an electric motor (51,61) serving as a drive source, the controller (70) calculating a retract completion time (Ta) for the movable panel (30) to reach the retracted position based on a rotational speed of the electric motor (51, 61), and comparing the calculated retract completion time (Ta) with an open position arrival time (Tb) estimated beforehand for the rear hatch main body (20) to reach the open position from the closed position for controlling a locking or unlocking of the lock portion (81).
